# EUROPÄISCHE PATENTSCHRIFT

(11) **EP 0 602 074 B1**
(45) Veröffentlichungstag und Bekanntmachung des Hinweises auf die Patenterteilung: **26.03.1997**
(21) Anmeldenummer: 92917603.0
(22) Anmeldetag: 24.08.1992
(51) Int. Cl.: C01B 15/10, C11D 3/39

(54) **LAGERSTABIL VERKAPSELTES NATRIUMPERCARBONAT UND VERFAHREN ZU SEINER HERSTELLUNG**
LONG-SHELF-LIFE ENCAPSULATED SODIUM PERCARBONATE AND PROCESS FOR PRODUCING IT
PERCARBONATE DE SODIUM ENCAPSULE, STABLE AU STOCKAGE, ET SON PROCEDE DE FABRICATION

(30) Priorität: 03.09.1991 DE 4129242; 10.03.1992 DE 4207554
(43) Veröffentlichungstag der Anmeldung: 22.06.1994
(73) Patentinhaber: DEGUSSA AG, 60311 Frankfurt (DE)
(72) Erfinder: BEAUJEAN, Hans-Josef, D-4047 Dormagen (DE); CARDUCK, Franz-Josef, D-5657 Haan (DE); BODE, Jens, D-4000 Düsseldorf 1 (DE)
(86) Internationale Anmeldenummer: EP9201941
(87) Internationale Veröffentlichungsnummer: WO9304982

(56) Entgegenhaltungen:
- EP-A- 0 030 759
- EP-A- 0 306 465
- DE-A- 3 732 947
- FR-A- 2 123 476
- DATABASE WPI Week 7234, Derwent Publications Ltd., London, GB; AN 72-54757T/34 & JP-A-47032200

## Beschreibung

Die Erfindung beschreibt einen neuen Vorschlag zur Optimierung des Schmelzauftrages wasserfreier Hüllsubstanzen auf feinteiliges Natriumpercarbonat zur Erhöhung dessen Lagerstabilität unter praktischen Einsatzbedingungen.

Natriumpercarbonat, eine Additionsverbindung, bei der pro Mol Na₂CO₃ 1,5 Mol H₂O₂ im Kristallgitter eingelagert sind, ist ein wichtiger Kandidat für den Austausch gegen das Natriumperborat-Tetrahydrat, das heute als Oxidationsmittel in breitem Umfange beispielsweise als bleichendes Agens in Wasch- und Reinigungsmitteln Verwendung findet. Die entscheidende Schwäche des Natriumpercarbonats ist dessen Lagerinstabilität, beispielsweise in feuchter Atmosphäre und/oder in Abmischung mit Wirkstoffkomponenten wie sie üblicherweise in Wasch- und Reinigungsmitteln vorliegen.

Seit langer Zeit und bis in die jüngste Vergangenheit wird versucht unter Einsatz verschiedener Arbeitsprinzipien - insbesondere Zusatz stabilisierender Komponenten zum Percarbonat und/oder Umhüllung der Percarbonatteilchen mit geeigneten Schutzsubstanzen - dieser Schwäche zu begegnen. Wenn hier auch Teilerfolge erzielt worden sind, so fehlt doch bis heute ein Vorschlag, der integral den vielgestaltigen Schwierigkeiten und Aspekten gerecht wird, die im hier betroffenen Zusammenhang zu berücksichtigen sind. Ohne Anspruch auf Vollständigkeit gilt beispielsweise: Die Ursachen für die unerwünschte Percarbonatzersetzung bei dessen Lagerung und im praktischen Einsatz sind komplex. Feuchtigkeit, thermische Einflüsse und Interaktion mit anderen Komponenten der Stoffgemische auch im Zustand der festen Wirkstoffmischungen führen zum Peroxidabbau. Als Zersetzungsprodukt bleibt Wasser zurück, das seinerseits wiederum weiterführend die Percarbonatzersetzung katalysiert. Vorschläge des Standes der Technik den Percarbonatkristall durch Umhüllung mit einer wasserabweisenden beziehungsweise wasserundurchlässigen Hüllsubstanz zu verkapseln berücksichtigen offensichtlich eine Reihe von potentiell schädlichen Faktoren nicht hinreichend. Beim Antrag der Hüllsubstanzen in Form wäßriger Wirkstoffzubereitungen können auch bei unmittelbarem Austrag des Wassers durch gleichzeitige Trocknung des beschichteten Feingutes katalytische Wassermengen in dem umhüllten Partikel inkludiert werden, ihre Entfernung im Trocknungsvorgang wird durch den entstehenden weitgehend wasserdichten Film der Hüllsubstanz behindert oder unmöglich gemacht. Damit kann in unkontrollierbarer Weise der Keim zum unerwünschten Zersetzungsvorgang in das jeweilige Natriumpercarbonat-Partikel eingebaut werden.

Bekannt ist der Versuch, geeignete Hüllsubstanzen als Schmelze und/oder als Lösung der Hüllsubstanzen in organischen Lösungsmitteln aufzutragen. Nur vordergründig wird damit der angesprochene Problemenkreis erleichtert. So wird beispielsweise in der deutschen Offenlegungsschrift 22 03 885 vorgeschlagen, als wasserunlösliche Hüllsubstanzen Fettsäuren, Fettsäureglycerinester, Fettsäurealkanolamide und/oder langkettige aliphatische Alkohole auf feinteiliges Natriumpercarbonat aufzutragen. Dabei wird beispielsweise heißes geschmolzenes Überzugsmittel über die Teilchen gesprüht, die sich in einem Wirbelbett bewegen, das über den Schmelzpunkt des Überzugsmittels erhitzt wird. Anschließend wird das Wirbelbett des beschichteten Percarbonats durch ein kaltes Gas abgekühlt. Nach einem weiteren Ausführungsbeispiel wird heißes geschmolzenes Überzugsmittel in eine heiße Teilchenschicht eingebracht und mechanisch geschüttelt, zum Beispiel in einem Lodige-Morton-Mixer, anschließend läßt man abkühlen. Auch beim Einsatz der festen Hüllmittel zusammen mit organischen Lösungsmitteln ist eine nicht unbeträchtliche thermische Belastung des Natriumpercarbonats erforderlich. So wird beispielsweise eine nicht-wäßrige Lösung des Überzugsmittels über die sich in einem Wirbelbett bewegenden Partikel gesprüht, wobei ständig heiße Luft eingeblasen wird, um das Lösungsmittel abzudampfen. Vergleichbare Vorschläge zeigt die EP 030 759.

Natriumpercarbonat wird mit Heißluft (ca. 90 bis 100°C) in einer Wirbelschicht gehalten und dann mit einer Schmelze der Hüllsubstanzen überzogen, anschließend wird abgekühlt. Als Hüllsubstanzen werden hier neben Fettsäuren und Fettalkoholen auch langkettige Kohlenwasserstoffe eingesetzt. Sowohl hier wie in der Lehre der zuvor genannten deutschen Offenlegungsschrift ist vom gewählten Verfahrenstyp her davon auszugehen, daß durch die thermische Beanspruchung des festen Natriumpercarbonatteilchens im Prozeß des Schmelzauftrages der Hüllsubstanz doch eine soweit gehende thermische Beanspruchung der Kernmasse stattfindet, daß eine beginnende Peroxidzersetzung unter Bildung des Zersetzungsproduktes Wasser und dessen Inklusion in das umhüllte Percarbonat-Partikel stattfinden.

Die Erfindung geht von der Aufgabe aus ein Schmelzbeschichtungsverfahren für feinteiliges Natriumpercarbonat mit bei Normalbedingungen festen Hüllsubstanzen vorzuschlagen, das die Möglichkeit eröffnet, in bisher nicht bekannter Weise die verschiedenartigen Fehlerquellen bei der Gewinnung eines nachhaltig lagerstabilen Percarbonatproduktes einzuschränken oder gar auszuschließen. Die Erfindung will darüberhinaus einen Verfahrenstyp zur Verfügung stellen, der zur Gewinnung der großtechnisch benötigten Mengen eines derart stabilisierten Produkts auf Natriumpercarbonat-Basis geeignet ist. Dieser letzte Gesichtspunkt hat für die praktische Brauchbarkeit einer technischen Lehre entscheidungserhebliche Bedeutung. Alleine der Bereich des Perborataustausches durch Natriumpercarbonat im Sektor der Textilwaschmittel läßt nur solche Konzeptionen als aussichtsreich erscheinen, die mit technisch und wirtschaftlich vertretbarem Aufwand eine Inhibierung und Stabilisierung des feinteiligen Natriumpercarbonats in großtechnischen Mengen ermöglichen.

### Der Gegenstand der Erfindung

Gegenstand der erfindungsgemäßen Lehre ist damit die Anwendung des Verfahrens zum Schmelzauftrag eines bei Raumtemperatur festen Beschichtungsmittels auf feinteilige Feststoffe, bei dem das feinteilige Feststoffgut in kontinuierlichem Strom durch eine ebenfalls kontinuierlich erzeugte Sprühnebelzone des geschmolzenen Beschichtungsmittels geschleudert wird, zur wasserfreien Umhüllung von festem Natriumpercarbonat mit einem hydrophobierenden Schutzmantel des bei Raumtemperatur festen Beschichtungsmaterials, wobei das Beschichtungsmittel ausgewählt ist aus einem Entschäumergemisch, das frei ist von Siloxanpolymeren und emulgierend beziehungsweise dispergierend wirkenden Tensiden und ein homogenes Gemisch folgender Bestandteile darstellt:
(a) 25 bis 60 Gewichtsprozent eines Paraffinwachses beziehungsweise Paraffinwachsgemisches,
(b) 10 bis 60 Gewichtsprozent mikrokristallinen Paraffinwachses, wobei die nach der Differential-Thermo-Analyse (DTA) bestimmten Anteile an flüssigen Bestandteilen in dem Gemisch aus (a) und (b) bei -15 °C 0 %, bei 0 °C 0% bis 5%, bei 25 °C 2 % bis 25 %, bei 50 °C 20 % bis 80 %, bei 75 °C 80 % bis 100 % und oberhalb 90 °C 100 % betragen sollen,
(c) 5 bis 20 Gewichtsprozent eines von C₂₋₇-Diaminen und gesättigten C₁₂₋₂₂-Fettsäuren abgeleiteten Diamins, das in feinverteilter Form vorliegt und eine Teilchengröße von weniger als 50 µm aufweist, wobei mindestens 90 % der Teilchen kleiner als 30 µm sind oder einem zur in situ Bis-amidbildung geeigneten Stoffgemisch aus einem C₂₋₇-Diamin und einer C₁₂₋₂₂-Fettsäure oder Fettsäurederivat.

In einer bevorzugten Ausführungsform wird in diesem Verfahren mit Verweilzeiten des Natriumpercarbonats in der erschmolzenen Sprühnebelzone von höchstens etwa einer Sekunde und vorzugsweise unterhalb einer Sekunde gearbeitet. Es ist weiterhin in einer wichtigen Ausführungsform der erfindungsgemäßen Lehre vorgesehen, das frisch umhüllte Natriumpercarbonat-Partikel unmittelbar zu kühlen, wobei hier ein Kühlgasstrom auf Basis Luft/Flüssig-Stickstoff ein bevorzugtes Arbeitsmittel im Sinne des erfindungsgemäßen Handelns ist.

Die Erfindung betrifft in einer weiteren Ausführungsform das als praktisch nicht agglomeriertes rieselfähiges Gut vorliegende und mit einer Schutzhülle eines wasserabweisenden Beschichtungsmittels ausgerüstete Natriumpercarbonat-Pulver, das auch im Natriumpercarbonat-Kern und/oder im Hüllmaterial zusätzlich bekannte Stabilisatoren für Natriumpercarbonat enthalten kann und nach dem erfindungsgemäßen Verfahren gewonnen worden ist.

### Einzelheiten zur erfindungsgemäßen Lehre

Die Vorteile des erfindungsgemäßen Verfahrens sind im Lichte der eingangs geschilderten komplexen Schwierigkeiten einleuchtend: Das feinteilige Feststoffgut auf Natriumpercarbonat-Basis wird - ohne die Notwendigkeit des Erhitzens der Feststoffpartikel - bei Normaltemperatur oder gewünschtenfalls auch als zuvor abgekühltes Feststoffgut durch eine Sprühnebelzone des geschmolzenen Beschichtungsmittels geschleudert. Der notwendige Temperatureintrag im erfindungsgemäßen Verfahren beschränkt sich damit auf das Schmelzen des Hüllmaterials, das als Sprühnebel mit steuerbarer Dichte des feindispersen Flüssiganteils in dieser Sprühnebelzone zur Interaktion mit der Feststoffoberfläche bereit steht. Diese Sprühnebelzone des geschmolzenen Beschichtungsmittels wird dabei ebenfalls kontinuierlich erzeugt, so daß im insgesamt kontinuierlichen Verfahrensfluß praktisch beliebige Mengen an umhülltem Natriumpercarbonat großtechnisch erzeugt werden können.

Die Kontaktzeit des individuellen Feststoffteilchens im Kontakt mit der Sprühnebelzone des erschmolzenen Hüllmaterials ist extrem kurz bemessen und liegt höchstens im Bereich von Sekunden, vorzugsweise im Bereich von maximal einer Sekunde, macht aber üblicherweise nur Bruchteile einer Sekunde aus. So reichen im allgemeinen Kontaktzeiten des individuellen Feststoffpartikels mit der Sprühnebelzone im Bereich bis etwa 0,5 Sekunden völlig aus, um einen hinreichenden Auftrag an disperser Flüssigphase auf der Feststoffpartikeloberfläche sicherzustellen, der das Feststoffpartikel abdichtend umhüllt und dabei auch in seiner individuellen Materialdicke noch gesteuert werden kann. Die damit verbundene Aufheizung der Kernsubstanz beschränkt sich auf den Wärmebetrag, der über den auf die Feststoffoberfläche aufkondensierten Schmelzanteil abgegeben wird. Hier sieht das erfindungsgemäße Verfahren eine wichtige zusätzliche Hilfsmaßnahme vor:

Das frisch beschichtete feinpartikuläre Gut wird in der bevorzugten Verfahrensführung unmittelbar in einem Kühlgasstrom aufgenommen, der nach Menge, Strömungsgeschwindigkeit und Temperatur des Hilfsgasstromes derart reguliert wird, daß eine praktisch sofortige Erstarrung und Kühlung des feinen als Schmelzphase aufgetragenen Mantels des Hüllmaterials sichergestellt ist. Als besonders geeignetes Hilfsgas hat sich hier vorgekühlte Luft erwiesen, wobei in einer besonders wichtigen Ausführungsform der Erfindung Kühlgasströme zum Einsatz kommen, die durch Abmischung von Luft mit entsprechenden Mengen an Flüssig-Stickstoff auf die unter den jeweiligen Verfahrensbedingungen geforderten Kühltemperaturen eingestellt worden sind. Erfindungsgemäß wird damit zweierlei erreicht: Noch vorhandene fühlbare Wärme aus der aufgetragenen Umhüllung des Einzelpartikels wird in den Kühlgasstrom abgeführt und damit dem Übertritt in das Natriumpercarbonat-Partikel entzogen. Damit kann eine unerwünschte thermische Beanspruchung des zu umhüllenden temperatursensitiven Gutes mit Sicherheit ausgeschlossen werden. Zum anderen führt die Schockkühlung des beschichteten Gutes zu so weit gehender Erhärtung des aufgetragenen Hüllmaterials, daß unerwünschte Verklebungen und Agglomerierungen des pulverförmigen Materials zuverlässig ausgeschlossen werden können. In diesem Zusammenhang sind weiterführende Elemente der erfindungsgemäßen Lehre zu berücksichtigen auf die im nachfolgenden noch eingegangen wird.

Das erfindungsgemäße Verfahren greift mit den hier dargestellten Elementen auf einen Verfahrenstyp zurück, wie er beispielsweise aus der EP 048 312 seit nahezu 10 Jahren bekannt ist. Beschrieben wird in dieser Druckschrift ein Verfahren und die hierfür geeignete Vorrichtung zum kontinuierlichen Mischen einer Flüssigphase und einer pulverförmigen Phase unter Ausbildung im wesentlichen homogener Gemische. Geschildert ist in dieser Druckschrift eine radförmig ausgebildete Mischvorrichtung, in der zwei individuell ausgebildete und anzutreibende radförmige Scheiben übereinander gelagert sind. Der einen Scheibe wird das Feststoffpulver zugeführt, die darunter liegende Scheibe wird mit der flüssigen Komponente beaufschlagt. Beide Scheiben laufen mit hohen Umdrehungsgeschwindigkeiten die im Bereich von einigen 100 bis einigen 1.000 UpM liegen können und zum Beispiel 1.000 bis 5.000 UpM betragen. Die jeweils beaufschlagten Scheibenflächen und insbesondere der Rand der die Flüssigkeit tragenden Scheibe sind so ausgestaltet, daß einerseits die Sprühnebelzone vom Rand des mit hoher Umdrehungsgeschwindigkeit laufenden Rades abgeschleudert und kontinuierlich nachgebildet wird, zum anderen wird das dem anderen radförmigen Element kontinuierlich zugeführte Feststoffpulver durch diese Sprühnebelzone der Flüssigphase hindurchgeschleudert. Aufgrund der hohen Arbeitsgeschwindigkeiten beider Teilelemente kommt es zu dem sehr kurzfristigen Zeitraum der Berührung der zwei Materialphasen miteinander und damit zu dem auch erfindungsgemäß angestrebten Ergebnis des zeitlich nur sehr kurzen Kontakts der Feststoffteilchen mit der warmen beziehungsweise heißen Sprühnebelphase.

Vorrichtungen der hier geschilderten Art haben sich als brauchbar, gerade auch für die Lösung der erfindungsgemäßen komplexen Aufgabenstellung erwiesen, wie sie eingangs geschildert worden ist. Daß sich gerade hier neue Möglichkeiten für die verbesserte Ausbildung eines stabilisierten feinpulvrigen Natriumpercarbonats mit hoher Lagerbeständigkeit bei hohem Erhaltungsgrad des Peroxidgehaltes anbieten ist von der Fachwelt bisher ersichtlich nicht erkannt worden. Eine weiterführende Anwendung der Vorrichtung aus der EP 048 312 ist beispielsweise in der EP 306 465 beschrieben. Hier sollen insbesondere organische Komponenten wie Enzyme, Penicillinverbindungen oder andere Antibiotika, Vitamine, Mikroorganismenkulturen und dergleichen mit Schmelzen von Fetten, Paraffinen, Fettsäureestern, Polyethylenglykol, Fettsäuren und dergleichen überzogen werden. Durchweg handelt es sich dabei nicht um Produkte von der Art des Natriumpercarbonats für dessen Einsatz beispielsweise in Textilwaschmitteln und/oder Reinigungsmitteln, sondern um Produkte beziehungsweise Entwicklungen aus dem Bereich insbesondere pharmazeutischer Produkte. Sowohl nach Art als auch nach geforderter Menge des herzustellenden Gutes sind hier Vergleiche nicht möglich.

Wenn auch die Verwirklichung der erfindungsgemäßen Lehre in Vorrichtungen der zuletzt geschilderten Art besonders gut möglich ist, so ist das Arbeiten im erfindungsgemäßen Sinne hierauf nicht beschränkt. Wesentlich sind für das erfindungsgemäße Arbeiten die Einhaltung der geschilderten Hauptelemente: Das in kontinuierlichem Strom zugeführte feinteilige Pulver auf Natriumpercarbonat-Basis wird durch eine ebenfalls in kontinuierlichem Verfahren erzeugte Sprühnebelzone geschleudert, so daß im kurzen Kontaktzeitraum die Beladung des individuellen Feststoffpartikels mit Schmelzphase stattfindet, dann aber unmittelbar das Feststoffpartikel die Sprühnebelzone verläßt und hier bevorzugt vom Kühlgasstrom aufgenommen wird.

Als Beschichtungsmaterialien für den Aufbau der Schmelz-Sprühnebelzone eignen sich alle für den hier betroffenen Arbeitszweck vorbekannten insbesondere wasserfreien organischen Substanzen, die aus ihrer Beschaffenheit heraus einerseits zum Aufbau der Sprühnebelzone und andererseits zur Ausbildung des unter Normalbedingungen festen und hinreichend wasserdichten Schutzüberzugs auf dem Feststoffteilchen geeignet sind. Bevorzugt wird im Sinne des erfindungsgemäßen Verfahrens hier einem weiterführenden Ziel entsprochen: Ökologische Überlegungen lassen es heute insbesondere im Bereich der in großen Mengen zum praktischen Einsatz kommenden Chemikalien beziehungsweise Chemikaliengemische als wünschenswert erscheinen, daß eine hinreichende Umweltverträglichkeit der Einzelkomponenten solcher Wirkstoffmischungen sichergestellt ist. Für Wasch- und Reinigungsmittel bedeutet das insbesondere, daß als ökologisch verträgliche Waschmittelbestandteile insbesondere in der Abwasseraufbereitung leicht abbaubare Komponenten eingesetzt beziehungsweise mitverwendet werden.

Die rein technische Funktion des hinreichenden Umhüllens und Verschließens eines Natriumpercarbonat-Partikels kann mit geeigneten Paraffinwachs enthaltenden Entschäumergemischen erzielt werden. Die Anwendung der Entschäumergemische wirkt in einer Waschflotte schaumregulierend.

Die Festpunkttemperaturen beziehungsweise die Erstarrungstemperaturen oder Erstarrungsbereiche der Beschichtungsmittel liegen im allgemeinen bei wenigstens etwa 35°C und zweckmäßigerweise oberhalb 40°C. Es hat sich als möglich erwiesen, Beschichtungsmittel mit Festpunkttemperaturen beziehungsweise Schmelzpunkten und Erstarrungstemperaturen bis zu etwa 150°C einzusetzen, wobei sich als besonders geeignet Vertreter der hier betroffenen Entschäumergemische mit Schmelzpunkten und Erstarrungstemperaturen im Bereich von etwa 45 bis 110°C erwiesen haben. Es kann erfindungsgemäß bevorzugt sein, daß das den Überzug bildende organische Material Festpunkte bei oder oberhalb etwa 50°C besitzt.

Unter Berücksichtigung der großtechnisch benötigten Mengen der hier betroffenen schichtbildenden Hilfsstoffe kommen als Einsatzmaterialien nicht reine Stoffe, sondern Stoffgemische zum Einsatz, die mehr oder weniger stark unterschiedliche Schmelz- und/oder Erweichungspunkte haben. Das Mischgut zeigt dementsprechend in aller Regel keinen konkreten Schmelz- beziehungsweise Festpunkt, sondern üblicherweise einen mehr oder weniger breiten Festpunktsbereich. Für die Optimierung des erfindungsgemäßen Verfahrens kann es wichtig sein, vergleichsweise enge Festpunkts- oder Erstarrungsbereiche in dem einzusetzenden Beschichtungsmittel auszuwählen beziehungsweise vorzugeben. So wird in der bevorzugten Ausführungsform ein - in der Regel aus einer Mehrzahl von individuellen Komponenten zusammengesetztes - Beschichtungsmittelgemisch mit einem Festpunktsbereich von nicht mehr als etwa 10°C und insbesondere von nicht mehr als etwa 5°C eingesetzt. In einer wichtigen Ausführungsform der Erfindung zeigen die erfindungsgemäß verwendeten Beschichtungsmittel Festpunktsbereiche nicht mehr als etwa 3°C.

In einer wichtigen Ausführungsform des erfindungsgemäßen Verfahrens wird die Temperatur des geschmolzenen und in Form einer Sprühnebelzone verteilten Beschichtungsmittels auf die -Erstarrungstemperaturen beziehungsweise Festpunktsbereiche des Beschichtungsmittels wie folgt abgestimmt: Es ist in der Regel zweckmäßig die Temperatur der geschmolzenen Beschichtungsmasse in der Sprühnebelzone wenigstens etwa 5 bis 10°C oberhalb der Erstarrungstemperaturen beziehungsweise Festpunktsbereiche dieser Beschichtungsmasse einzustellen. Auf der anderen Seite ist es aber ebenfalls bevorzugt keine zu hohen Temperaturen -wiederum bezogen auf den Erstarrungsbereich der Beschichtungsmasse - zu wählen. Besonders geeignete Temperaturbereiche für die Flüssigkeitströpfchen in der Sprühnebelzone liegen damit etwa im Bereich von 10 bis 50°C oberhalb der Erstarrungstemperaturen der Beschichtungsmasse und insbesondere im Temperaturbereich von etwa 15 bis 35°C oberhalb dieser Maßzahlen.

Verwendbare, aber nicht erfindungsgemäße Beschichtungsmittel sind langkettige gesättigte Carbonsäuren und/oder entsprechende gesättigte Alkohole. Üblicherweise enthalten Komponenten dieser Art bis zu etwa 24 C-Atome im Molekül. Geeignet sind vergleichbare Ester, insbesondere auch Wachsester auf Basis langkettiger monofunktioneller Carbonsäuren und entsprechender Alkohole wie Bienenwachs oder Carnauberwachs. Mischungen verschiedener Wachse oder solcher Wachse mit monofunktionellen langkettigen Alkoholen wie Hexadeanol haben sich als sehr geeignet erwiesen. Anstelle der hier genannten Wachse auf Naturstoffbasis können für die großtechnische Verwertung insbesondere auch vergleichbare synthetische Wachsester Verwendung finden. Andere geeignete wasserunlösliche Hüllsubstanzen sind Fettsäureglycerinester, Fettsäurealkanolamide aber auch Polyethylenglykolverbindungen höheren Molekulargewichts, beispielsweise PEG 12.000. Besonders geeignete Beschichtungsmittel sind wie schon angegeben Verbindungen, die in der Abwasseraufbereitung leicht abbaubar sind, wobei hier wenigstens überwiegend geradkettige Carbonsäuren, Carbonsäureester, Alkohole und/oder Ether der angegebenen Festpunktbereiche bevorzugt sind. Materialien die zum wenigstens überwiegenden Anteil natürlichen Ursprungs sind können beispielsweise aus ökologischen Überlegungen besondere Bedeutung haben.

Die das Natriumpercarbonat-Korn verkapselnde Hülle kann einschichtig aber auch gewünschtenfalls mehrlagig ausgebildet sein. In dieser zuletzt genannten Ausführungform wird zweckmäßigerweise wenigstens die unmittelbar mit dem Natriumpercarbonat in Berührung stehende Materialschicht der Hülle im Sinne des erfindungsgemäßen Verfahrens aufgetragen. Die darüber angeordnete(n) weitere(n) Lage(n) sind aus dem gleichen oder einem anderen Hüllmaterial als die erste Schicht ausgebildet. Die Form des Auftrages solcher zusätzlicher Hüllschichten kann im Sinne des erfindungsgemäßen Verfahrens gewählt werden, es ist aber auch möglich, hier ganz andere Beschichtungsmethoden einzusetzen, die durch die im erfindungsgemäßen Sinne aufgebrachte erste Trennschicht jetzt vergleichsweise problemlos verwendet werden können. So beschreibt beispielsweise die ältere deutsche Patentanmeldung P 41 09 953.2 der Anmelderin ein verkapseltes feinpartikuläres Natriumpercarbonat mit erhöhter Lagerbeständigkeit gegenüber Peroxidverlust, das mit einer 1-schaligen oder bevorzugt mehrschichtigen geschlossenen Schutzhülle umfaßt ist, die wenigstens anteilig aufgetrocknete wasserlösliche Polymerverbindungen natürlichen und/oder synthetischen Ursprungs mit einer Glasübergangstemperatur enthalten, die wenigstens 10°C oberhalb der Arbeitstemperatur beim Auftrag der wäßrigen Polymerlösung liegt und mittels einer wäßrigen Zubereitungsform des Polymeren aufgebracht worden ist. Die Kombination eines solchen Verfahrenschritts mit der erfindungsgemäßen Lehre ist möglich, ohne die dargestellten Vorteile der erfindungsgemäßen Lehre aufgeben zu müssen. Die im Sinne des erfindungsgemäßen Schmelzauftrags erste Schichtlage der Umhüllung wirkt als Barriere gegen einen unerwünschten Wassereintritt in das Percarbonat-Korn, so daß die vollständige Abtrocknung des als Hilfsmittel eingetragenen Wassers möglich wird. Der Gegenstand der Erfindung unfaßt damit die Kombination der hier beanspruchten Lehre mit der Offenbarung der älteren Anmeldung P 41 09 953.2. Der Gegenstand dieser älteren Anmeldung wird hiermit ausdrücklich auch zum Gegenstand der erfindungsgemäßen Offenbarung gemacht.

Eine weitere Möglichkeit liegt in der Kombination der erfindungsgemäßen Lehre mit den Maßnahmen der älteren deutschen Patentanmeldung P 41 09 954.0 der Anmelderin, deren Offenbarung hiermit ebenfalls ausdrücklich auch zum Gegenstand der vorliegenden Erfindungsoffenbarung gemacht wird. Beschrieben ist dort die Ausbildung der Umhüllung von Percarbonat mit langkettigen aliphatischen Carbonsäuren mit wenigstens 8 C-Atomen, wobei das Kennzeichen darin liegt, daß die Hüllsubstanz zumindest teilweise aus einem Gemisch von
a) mindestens einer unterhalb 35°C schmelzenden Carbonsäure und
b) mindestens einer bei 35° oder darüber schmelzenden Carbonsäure

besteht. Der Auftrag einer solchen Schutzschicht oder wenigstens ihrer innersten Lage kann im Sinne des erfindungsgemäßen Verfahrens aus der Sprühnebelzone des geschmolzenen Beschichtungsmittels erfolgen. Bei mehrlagigem Schalenaufbau können die äußeren Schichten der Hülle aber auch durch andere in der genannten älteren Anmeldung zitierte Auftragsverfahren aufgebracht werden.

Während in der DE 37 32 947 auf die Unverträglichkeit des Entschäumergemischs mit alkalisch reagierenden Trägersubstanzen, wie Natriumcarbonat hingewiesen wird, wurde jetzt überraschend festgestellt, daß Natriumpercarbonat mit dem Gemisch verträglich ist, obwohl es dem Natriumcarbonat an Alkalität nicht nachsteht.

Als zusätzlicher Vorteil neben der Stabilisierung des Percarbonats ist bei Verwendung des Entschäumergemischs als Hüllmaterial für das Natriumpercarbonat in erster Linie die Tatsache zu sehen, daß die Mengenverhältnisse von Natriumpercarbonat und darauf aufgebrachtem Entschäumergemisch sich ohne weiteres so einstellen lassen, daß bei Verwendung des so umhüllten Percarbonats in einem Vollwaschmittel beide Komponenten in den Mengen eingebracht werden, wie sie auch in der Waschlauge benötigt werden. Dies trifft für die in der DE 37 32 947 genannten Kombinationen des Entschäumergemischs mit anderen Kernmaterialien (Trägerstoffen) im allgemeinen nicht zu, so daß dort in der Regel Neutralsalze wie Natriumsulfat, die in modernen Waschmitteln als unnötige Ballaststoffe betrachtet werden, den größten Teil des Trägermaterials ausmachten.

Die in dem Entschäumergemisch enthaltenen Paraffinwachse stellen im allgemeinen komplexe Stoffgemische ohne scharfen Schmelz- oder Erstarrungspunkt dar. Man bestimmt ihren Schmelzbereich durch Differential-Thermo-Analyse (siehe Zeitschrift "The Analyst" 87 (1962), Seite 420 - 434).

Als Komponente (a) eignen sich Weich- und Hartparaffine sowie deren Gemische, die ein wenig ausgeprägtes Kristallisationsverhalten zeigen und im allgemeinen einen Erweichungs- und Schmelzbereich zwischen 10 ° und 60 °C, vorzugsweise 20 ° bis 55 °C aufweisen. Derartige Paraffine und Paraffingemische sind z. B. unter der Bezeichnung Petrolatum, Vaseline sowie Hartbeziehungsweise Tafelparaffine im Handel. Bei der Auswahl der Paraffinfraktionen beziehungsweise der aus einzelnen Paraffinfraktionen zusammengesetzten Mittel ist darauf zu achten, daß innerhalb der angegebenen und durch DTA bestimmten Temperaturbereiche sowohl noch festes als auch flüssiges Material vorliegt. Man erreicht dies beispielsweise durch Auswahl geeigneter Paraffinfraktionen beziehungsweise durch Mischen entsprechender Anteile an halbfesten Weichparaffinen und Hartparaffinen. Geeignete Gemische enthalten z. B. 1 bis 3 Gewichtsteile Weichparaffin (Vaseline) mit einem Erweichungs- und Schmelzbereich von 25 ° bis 42 °C, vorzugsweise 30 ° bis 40 °C, und 3 bis 1 Gewichtsteilen Hartparaffin (Tafelparaffin) vom Erweichungs- und Schmelzbereicht von 40 ° bis 60 °C, vorzugsweise 42 ° bis 55 °C.

Der Anteil der Komponenten (a) an dem Entschäumergemiscn beträgt im allgemeinen 5 bis 60, vorzugsweise 20 bis 50 Gewichtsprozent.

Als Komponente (b) kommen bekannte mikrokristalline Paraffinwachse in Frage, die einen Schmelzbereich von 55 ° bis 90 °C, vorzugsweise von 60 ° bis 80 °C aufweisen. Derartige mikrokristalline Wachse sind z. B. Bestandteil von Montanwachsen beziehungsweise hochschmelzenden Erdölfraktionen (Ceresin) und zeichnen sich durch einen Gehalt an verzweigten und cyclischen Paraffinen aus. Ihr Anteil an dem Entschäumergemisch beträgt im allgemeinen 20 bis 90 Gewichtsprozent, vorzugsweise 25 bis 60 Gewichtsprozent.

Art und Menge der Bestandteile (a) und (b) sollen im Rahmen der angegebenen Parameter so ausgewählt werden, daß die nach der Differential-Thermo-Analyse (DTA) bestimmten Anteile zu festen und flüssigen Bestandteile in dem Wachsgemisch in Abhängigkeit von der Temperatur vorzugsweise die folgende Verteilung zeigen:

| °C | flüssig | fest |
|---|---|---|
| 0 ° | 0 - 2 % | 100 - 98 % |
| 25 ° | 2 - 15 % | 98 - 85 % |
| 50 ° | 30 - 70 % | 70 - 30 % |
| 75 ° | 95 - 99 % | 1 - 5 % |
| 80 ° | 100 % | 0 % |

Die obige Verteilung berücksichtigt die Tatsache, daß auch solche Paraffingemische, die bei Raumtemperatur fest erscheinen beziehungsweise nicht fließen, gewisse Anteile an flüssigen Paraffinen enthalten.

Komponente (c) besteht aus Bis-amiden, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie in natürlichen Fetten beziehungsweise gehärteten fetten Ölen, wie Talg oder hydriertem Palmöl, enthalten sind. Geeignete Diamine sind beispielsweise Ethylendiamin, 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bis-amide sind Bis-myristoyl-ethylendiamin, Bis-palmitoyl-ethylendiamin, Bis-stearoyl-ethylendiamin und deren Gemische sowie die entsprechenden Derivate des Hexamethylendiamins.

Die Bis-amide, die in dem Paraffingemisch nicht löslich sind, müssen in feinverteilter Form vorliegen und eine Korngröße von weniger als 50 µm aufweisen, wobei mindestens 90 % der Partikel eine Korngröße von weniger als 30 µm besitzen sollen. Vorzugsweise liegt die maximale Korngröße der Partikel unter 20 µm, wobei mindestens 50 %, insbesondere mindestens 75 % der Partikel kleiner als 10 µm sind. Diese Angaben hinsichtlich der Partikelgröße beziehen sich auf die bekannte Bestimmungsmethode mit dem "Coulter Counter".

Die Herstellung des Entschäumungsgemisches kann in dieser Weise erfolgen, daß man in eine Schmelze der Bestandteile (a) und (b) das feinteilige Bis-amid (Komponente c) einträgt und durch intensives Vermischen darin homogenisiert. Die Schmelze sollte dazu eine Temperatur von mindestens 90 °C und höchstens 200 °C aufweisen. Vorzugsweise beträgt die Temperatur 100 ° bis 150 °C. Wesentlich für eine gute Wirksamkeit des Entschäumers ist das Vorliegen einer stabilen Dispersion der Bis-amid-Teilchen in der Paraffinmatrix, was durch eine der Erfindungsdefinition entsprechende Teilchengröße bewirkt wird. Zwecks Erzielung dieses Dispersionszustandes kann man ein Bis-amid einsetzen und dispergieren, das von vorneherein die entsprechende Teilchengröße aufweist, oder man verwendet ein grobteiligeres Ausgangsmaterial und unterwirft die Schmelze einer Mahlbehandlung mittels Kolloidmühlen, Zahnmühlen oder Kugelmühlen, bis die erwünschte Teilchengröße erreicht ist. Hierbei handelt es sich um eine bevorzugte Arbeitsweise.

Auch ein vollständiges Aufschmelzen der Bis-amide in der Paraffinschmelze und anschließendes schnelles Abkühlen auf Temperaturen unterhalb des Erstarrungspunktes der Bis-amide unter gleichzeitigem Homogenisieren der Schmelze kann zu einer entsprechend feinen Kornverteilung der Bis-amide führen. Bei der Wahl der Schmelztemperatur ist zu berücksichtigen, daß der mittels DTA bestimmte Schmelzbereich von technischem Bis-stearoylethylendiamin in der Paraffinschmelze etwa im Bereich von 123 bis 137 °C und der von Bis-stearoylhexamethylendiamin im Bereich von 132 bis 141 °C liegt. Für die entsprechenden Bis-myristoylamide liegen die jeweiligen Temperaturbereiche bei 119 bis 135 °C und 130 bis 138 °C. Unterhalb des Erstarrungsbereiches sind die Bis-amide in der Paraffinschmelze praktisch unlöslich.

Überraschenderweise wurde gefunden, daß Gemische mit besonders hoher Entschäumerwirkung erhalten werden, wenn man nicht die Bis-amide selbst, sondern die zu ihrer Herstellung benötigten Ausgangsstoffe, d. h. die Diamine und Fettsäuren bzw. deren funktionellen Derivate in der Paraffinschmelze dispergiert und durch geeignete Reaktionsführung zu den Bis-amiden umsetzt. Als funktionelle Derivate kommen z. B. die Anhydride, Chloride, Bromide oder Ester, z. B. die Methylester in Frage. Das Molverhältnis von Diamin zu Fettsäure kann zwischen 1 : 1,5 bis 1 : 2,2, vorzugsweise 1 : 1,8 bis 1 : 2 betragen. Ein Überschuß eines der Reaktionspartner kann ohne Nachteile im Gemisch verbleiben.

Die Amidierungsreaktion kann durch Zusatz geeigneter Katalysatoren beschleunigt werden. Sofern freie Fettsäuren eingesetzt werden, eignen sich vorzugsweise acide Katalysatoren, wie p-Toluolsulfonsäure oder Hydroxybenzosulfonsäure. Der Anteil des Katalysators beträgt zweckmäßigerweise 2 bis 12 Mol-%, bezogen auf Mol herzustellendes Bis-amid. Überraschenderweise wurde festgestellt, daß die Entschäumerwirkung des Endproduktes mit steigender Katalysatormenge tendenziell zunimmt. Dies ist möglicherweise auf die Bildung von Nebenprodukten unter Einbeziehung des Katalysators zurückzuführen, die in dem Entschäumergemisch verbleiben. Vorzugsweise beträgt der Anteil des Katalysators 3 bis 10 Mol-%, bezogen auf Bis-amid.

Die Umsetzung erfolgt bei erhöhten Temperaturen, z. B. bei 100 bis 150 °C unter gleichzeitigem Durchmischen des Reaktionsgutes und Abdestillieren des enstehenden Reaktionswassers oder der sonstigen flüchtigen Reaktionsprodukte, wie Methanol bei Einsatz von Fettsäuremethylestern. Durch Einleiten inerter Gase, wie Stickstoff, kann das Austreiben der flüchtigen Bestandteile gefördert werden. Zweckmäßigerweise wird die Temperatur mit fortschreitender Umsetzung gesteigert. Reste an flüchtigen Bestandteilen können durch Unterdruck entfernt werden. Das erhaltene Gemisch aus Bis-amiden und Paraffinen, das die Bis-amide in besonders feiner Verteilung enthält, kann unmittelbar weiter verarbeitet werden.

Die Schutzschicht um das Percarbonat-Korn wird gewöhnlich in einer Menge von wenigstens etwa 1 Gew.-% und vorzugsweise in Mengen von wenigstens etwa 2 Gew.-% - bezogen auf Fertigprodukt - aufgebracht. Es kann dabei zweckmäßig sein auch größere Mengen, beispielsweise wenigstens etwa 5 Gew.-% der Beschichtungsmasse, auf dem Korn vorzusehen. In der Regel wird selbst im mehrlagigen Materialantrag allerdings insgesamt nicht mehr als etwa 15 - 20 Gew.-% an Beschichtungsmasse vorliegen - Gew.-% wieder bezogen auf Fertigprodukt. Von dem oben beschriebenen Entschäumergemisch werden vorzugsweise 3 bis 12 Gew.-% aufgebracht.

Das erfindungsgemäße Verfahren eignet sich zur Umhüllung eines feinteiligen Natriumpercarbonats, insbesondere mit Teilchengrößen im Bereich von etwa 0,1 bis 2 mm Durchmesser. Korngrößen zwischen etwa 0,2 und etwa 0,8 mm können aus anwendungstechnischen Überlegungen besonders geeignet sein. Das erfindungsgemäße Verfahren ermöglicht den Auftrag und die Verfestigung der Schutzhülle um entsprechend vorgebildetes kristallines Material ohne substantielle zusätzliche Agglomeration zu größeren Teilchen, auf der anderen Seite gibt das erfindungsgemäße Verfahren durchaus die Möglichkeit durch Variation der Verfahrensparameter im Beschichtungsvorgang auch eine gezielte Agglomeration zu vorbestimmbaren Teilchengrößen zu verwirklichen.

Als Percarbonat für die Behandlung im erfindungsgemäßen Verfahren wird üblicherweise kristallines Material eingesetzt. Geeignet sind sowohl hoch-reine Qualitäten als auch technische Qualitäten, wie sie von verschiedenen Herstellern angeboten werden. Die technischen Qualitäten enthalten dabei in der Mehrzahl bereits Zusätze, die während des Herstellprozesses oder der anschließenden Granulierung des Materials zur Verbesserung der Kristalleigenschaften, der Stabilität, der Rieselfähigkeit oder anderer Eigenschaften eingearbeitet worden sind. Bei diesen Zusätzen, die in der Größenordnung von einigen Gewichtsprozenten in den technischen Produkten enthalten sind, handelt es sich in den meisten Fällen um anorganische Verbindungen, in erster Linie Chloride, Silikate oder Phosphate von Alkali- oder Erdalkalimetallen. Der Aktivsauerstoffgehalt, der beim reinen Natriumpercarbonat 15,3 Gew.-% beträgt, liegt in den technischen Qualitäten im allgemeinen zwischen etwa 13 und etwa 14,5 Gew.-%. Dem Natriumpercarbonat und/oder dem Hüllmaterial können in an sich bekannter Weise Komplexbildner als Stabilisatoren - beispielsweise Polycarbonsäuren, Polyphosphonsäuren oder Aminopolycarbonsäuren oder deren Salze - und andere Hilfs- und Zusatzmittel beigefügt werden.

In gleicher Weise, wie in den nachfolgenden Beispielen anhand nicht-erfindungsgemäßer Hüllkomponenten gezeigt, lassen sich erfindungsgemäße Entschäumergemische zur Umhüllung einsetzen.

### Beispiele

In einer Vorrichtung gemäß der EP-A1 048 312 wird feinkristallines Natriumpercarbonat (durchschnittliche Teilchengröße etwa 0,5 mm) als Feststoffphase zugeführt, während in einer Versuchsreihe unterschiedliche Hüllsubstanzen als Schmelzphase zum Aufbau des Sprühnebels eingesetzt werden. Die nachfolgenden Hüllsubstanzen werden dabei in jeweils 1-schichtigem Auftrag und in einer Menge von 10 Gew.-% auf die zu umhüllenden Natriumpercarbonatteilchen aufgetragen: Polyethylenglykol 12.000, Bienenwachs und ein wachsartiges paraffinisches Kohlenwasserstoffgemisch (Paraffin 4230). Die Erstarrungsbereiche dieser Hüllsubstanzen sind die folgenden: PEG 12.000 58 bis 62 °C; Bienenwachs 60 bis 66 °C und Paraffin 4230 42 bis 44 °C.

Als-Schmelz- und Arbeitstemperatur zum Aufbau der Sprühnebelzone werden in dem erschmolzenen Gut Temperaturen ca. 20 °C oberhalb des jeweiligen Erstarrungsbereichs eingestellt.

Bei einer Umlaufleistung der Turbine von ca. 3.000 UpM wird das die Sprühnebelzone verlassende beschichtete Feststoffmaterial in einer Kühlstrecke von ca. 2 m Länge mittels Kaltluft einer sofortigen Schockkühlung unterworfen.

Bei den Versuchsserien A und B werden jeweils unterschiedliche Turbineneinsätze und/oder Durchflußbegrenzer eingesetzt.

Die auf diese Weise gecoateten Natriumpercarbonatteilchen werden in einer ersten Versuchsserie - einmal in einem offenen Glasgefäß und zum anderen in einem verschlossenen Glasgefäß - sowohl bei Raumtemperatur als bei 40 °C über den Zeitraum von insgesamt 6 Wochen gelagert. Der Gehalt an Aktivsauerstoff (A0-Gehalt) wird zu Beginn der Lagerversuche und dann im wöchentlichen Abstand bestimmt. Es werden dabei die Werte der nachfolgenden Tabelle 1 erhalten.

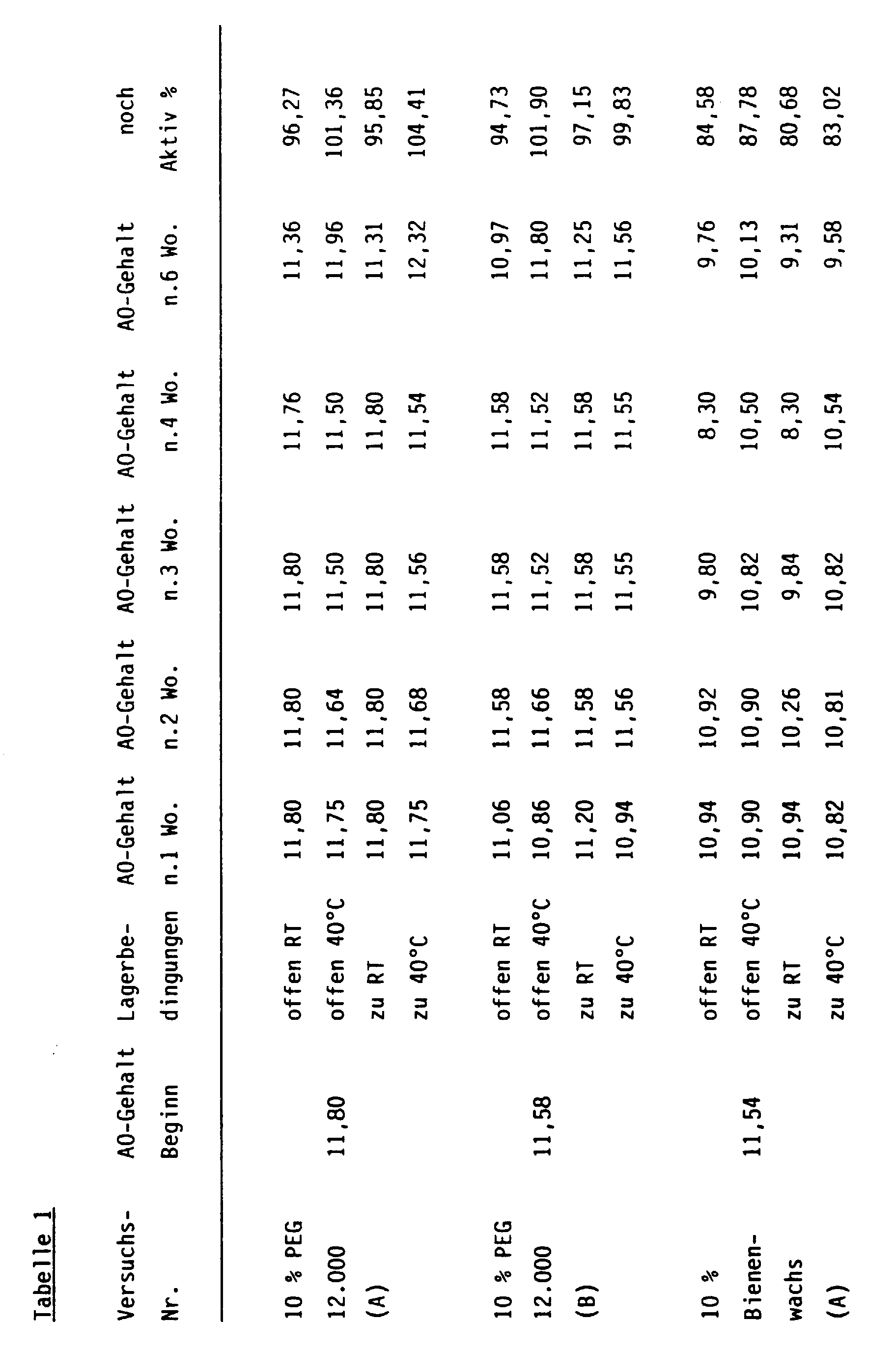

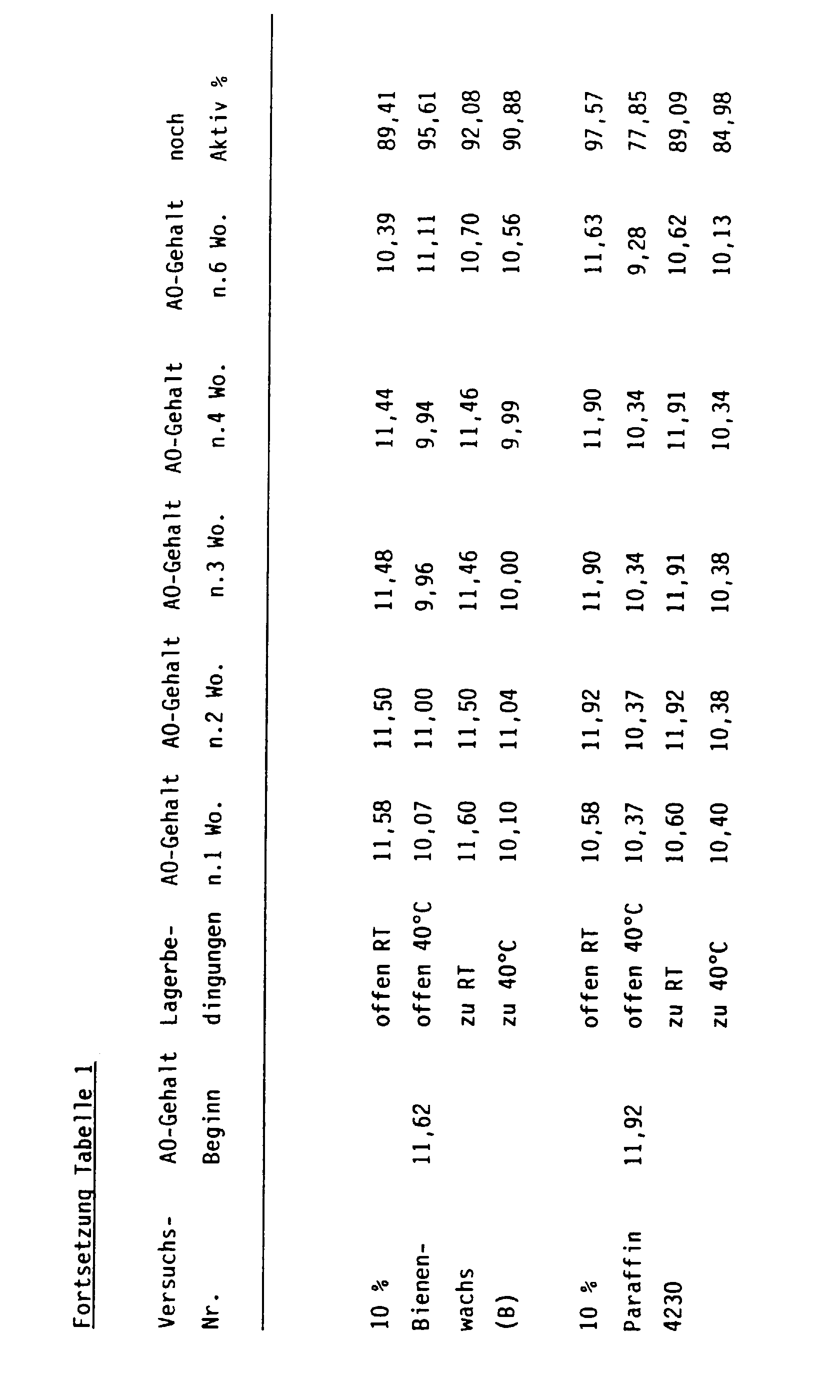

In einer weiterführenden Versuchsserie werden die gecoateten Materialien auf Basis von Natriumpercarbonat aus Tabelle 1 mit einem Textilwaschmittel ("Dixan" TP-Abmischung) abgemischt. Auch hier werden die jeweiligen Produktproben sowohl in offenen wie in verschlossenen Glasgefäßen einer bei Raumtemperatur und in Parallelversuchen bei 40°C gelagert. Auch hier wird jeweils der A0-Gehalt zu Beginn der sich über 6 Wochen erstreckenden Lagerversuche und dann im wöchentlichen Abstand bestimmt. Die dabei gefundenen Ergebnisse sind in der nachfolgenden Tabelle 2 zusammengefaßt.

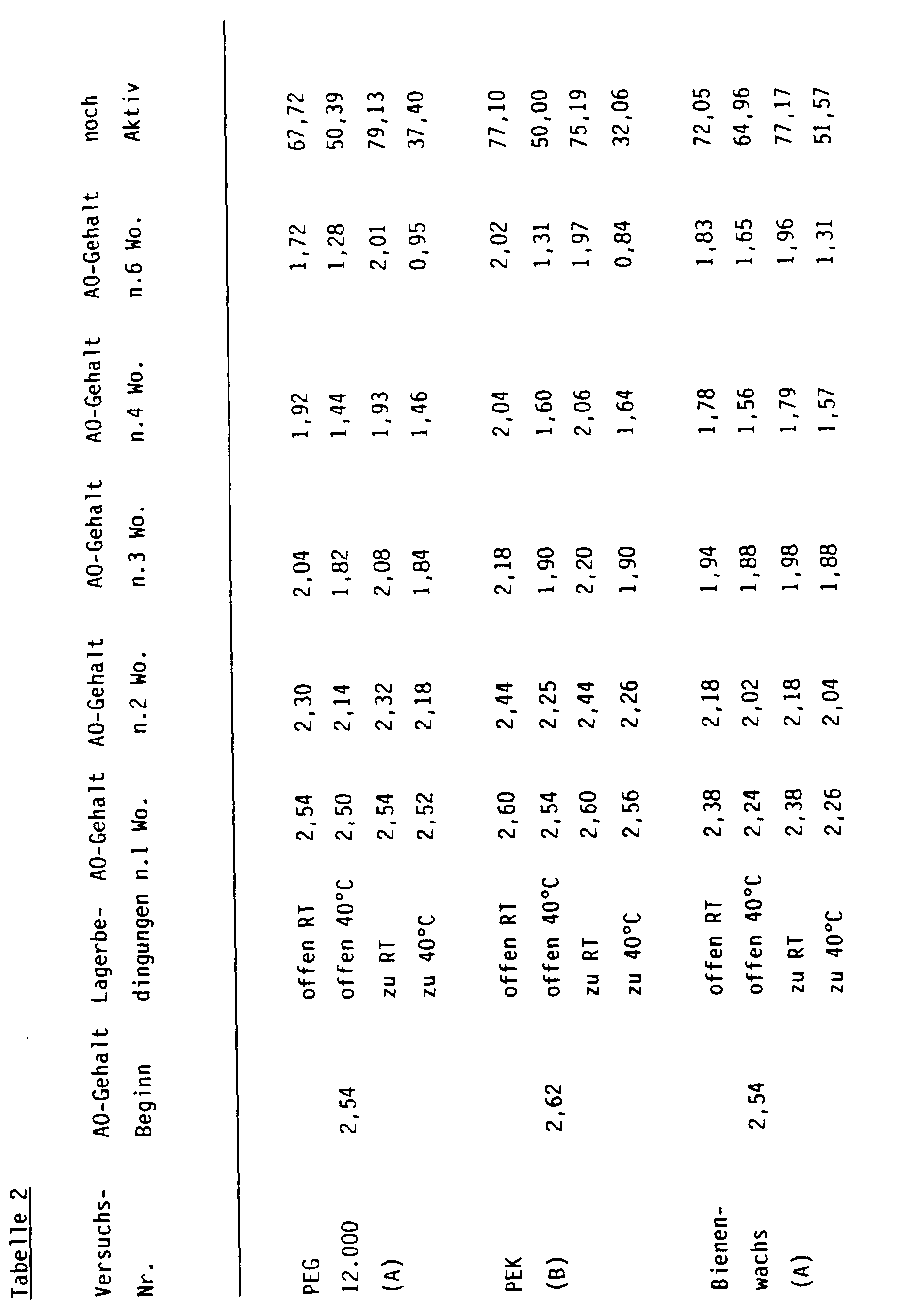

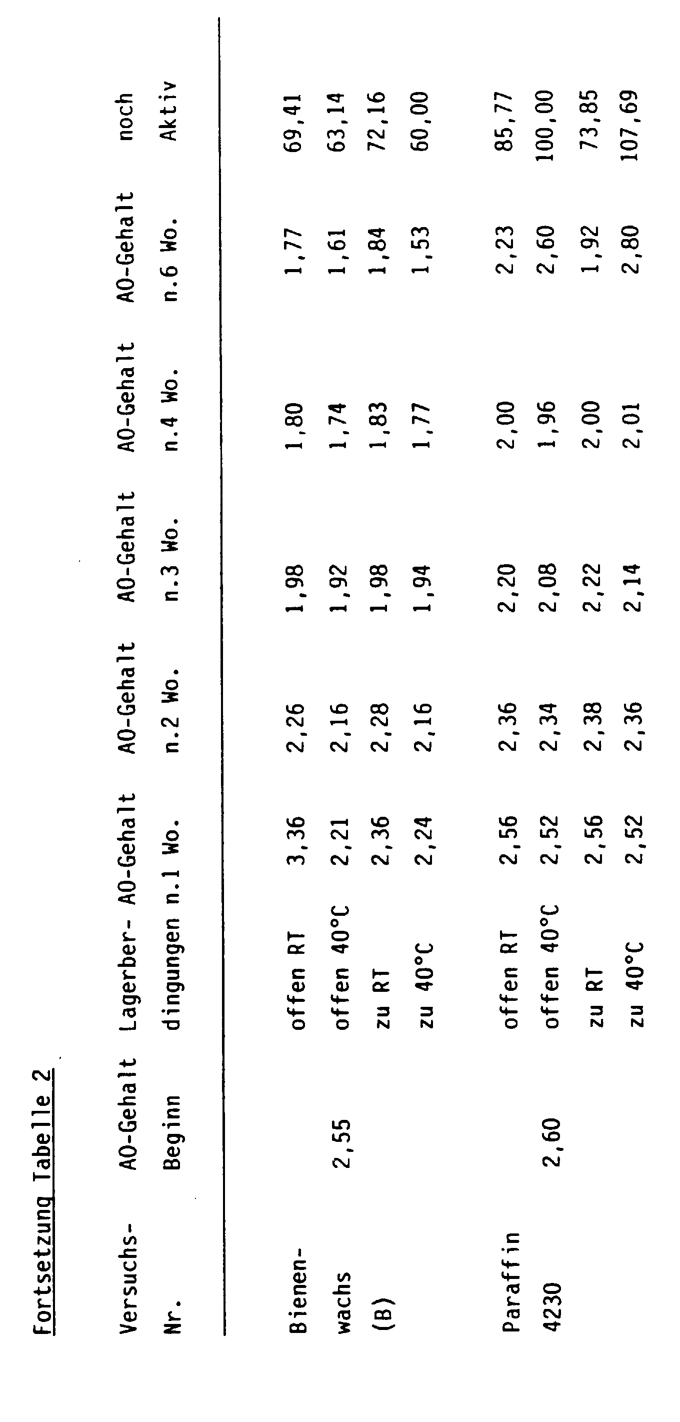

## Patentansprüche

1. Anwendung des Verfahrens zum Schmelzauftrag eines bei Raumtemperatur festen Beschichtungsmittels auf feinteilige Feststoffe, bei dem das feinteilige Feststoffgut in kontinuierlichem Strom durch eine ebenfalls kontinuierlich erzeugte Sprühnebelzone des geschmolzenen Beschichtungsmaterials geschleudert wird, zur wasserfreien Umhüllung von festem Natriumpercarbonat mit einem hydrophobierenden Schutzmantel des bei Raumtemperatur festen Beschichtungsmaterials, wobei das Beschichtungsmittel ausgewählt ist aus einem Entschäumergemisch, das frei ist von Siloxanpolymeren und emulgierend beziehungsweise dispergierend wirkenden Tensiden und ein homogenes Gemisch folgender Bestandteile darstellt:
(a) 25 bis 60 Gewichtsprozent eines Paraffinwachses beziehungsweise Paraffinwachsgemisches,
(b) 10 bis 60 Gewichtsprozent mikrokristallinen Paraffinwachses, wobei die nach der Differential-Thermo-Analyse (DTA) bestimmten Anteile an flüssigen Bestandteilen in dem Gemisch aus (a) und (b) bei -15 °C 0 %, bei 0 °C 0% bis 5%, bei 25 °C 2 % bis 25 %, bei 50 °C 20 % bis 80 %, bei 75 °C 80 % bis 100 % und oberhalb 90 °C 100 % betragen sollen,
(c) 5 bis 20 Gewichtsprozent eines von C₂₋₇-Diaminen und gesättigten C₁₂₋₂₂-Fettsäuren abgeleiteten Diamids(Bis-amids), das in feinverteilter Form vorliegt und eine Teilchengröße von weniger als 50 µm aufweist, wobei mindestens 90 % der Teilchen kleiner als 30 µm sind oder einem zur in situ Diamidbildung(Bis-amidbildung)geeigneten Stoffgemisch aus einem C₂₋₇-Diamin und einer C₁₂₋₂₂-Fettsäure oder Fettsäurederivat.

2. Ausführungsform nach Anspruch 1, dadurch gekennzeichnet, daß mit Verweilzeiten des Natriumpercarbonats in der erschmolzenen Sprühnebelzone unterhalb einer Sekunde, vorzugsweise unterhalb 0,5 Sekunden, gearbeitet wird.

3. Ausführungsform nach Ansprüchen 1 und 2, dadurch gekennzeichnet, daß das frisch umhüllte Natriumpercarbonat unmittelbar gekühlt wird und zu diesem Zweck vorzugsweise in einem Kühlgasstrom aufgenommen wird.

4. Ausführungsform nach Ansprüchen 1 bis 3, dadurch gekennzeichnet, daß ein Kühlgasstrom auf Basis Luft/Flüssig-Stickstoff eingesetzt und bevorzugt in solchen Mengenverhältnissen zugeführt wird, daß im gekühlten Gut Verklebungen über den frisch aufgetragenen Schutzmantel wenigstens weitgehend ausgeschlossen sind.

5. Ausführungsform nach Ansprüchen 1 bis 4, dadurch gekennzeichnet, daß Beschichtungsmittel mit Festpunkt- beziehungsweise Erstarrungstemperatur oberhalb 40 °C, vorzugsweise bei etwa oder oberhalb 50 °C gearbeitet wird, die zweckmäßigerweise 150 °C nicht überschreiten und insbesondere im Bereich von etwa 45 bis 110 °C liegen.

6. Ausführungsform nach Ansprüchen 1 bis 5, dadurch gekennzeichnet, daß als Beschichtungsmittel Verbindungen beziehungsweise Stoffgemische mit einem Festpunktbereich eingesetzt werden, der vorzugsweise nicht mehr als etwa 10 °C und insbesondere nicht mehr als höchstens etwa 5 °C umfaßt.

7. Ausführungsform nach Ansprüchen 1 bis 6, dadurch gekennzeichnet, daß die Temperatur der versprühten Beschichtungsmasse in der Sprühnebelzone auf Werte im Bereich von etwa 10 bis 50 °C oberhalb der Erstarrungstemperatur beziehungsweise des Erstarrungsbereichs der Beschichtungsmasse eingestellt wird.

8. Ausführungsform nach Ansprüchen 1 bis 7, dadurch gekennzeichnet, daß ökologisch verträgliche und insbesondere in der Abwasseraufbereitung leicht abbaubare Beschichtungsmittel eingesetzt werden.

9. Ausführungsform nach Ansprüchen 1 bis 8, dadurch gekennzeichnet, daß Beschichtungsmaterialien wenigstens überwiegend natürlichen Ursprungs zum Einsatz kommen.

10. Ausführungsform nach Ansprüchen 1 bis 9, dadurch gekennzeichnet, daß die Beschichtungsmasse einlagig oder mehrlagig aufgetragen wird, wobei im Falle eines Mehrschichtauftrages der Beschichtungsmasse wenigstens der Auftrag der ersten Lage auf das Natriumpercarbonatteilchen im zuvor beschriebenen wasserfreien Schmelzauftrag erfolgt und hier der Einsatz paraffinartiger Hüllsubstanzen besonders bevorzugt sein kann.

11. Ausführungsform nach Ansprüchen 1 bis 10, dadurch gekennzeichnet, daß die Schutzschicht in Mengen von wenigstens etwa 2 Gew.-%, vorzugsweise in Mengen von wenigstens etwa 5 Gew.-% - bezogen auf Fertigprodukt - aufgebracht wird, wobei zweckmäßigerweise die Menge der ggf. mehrlagigen Schutzschicht insgesamt nicht mehr als etwa 15 bis 20 Gew.-% ausmacht.

12. Mit einer Schutzhülle eines wasserabweisenden Beschichtungsmittels ausgerüstetes Natriumpercarbonatpulver, insbesondere für dessen Einmischung in feste Wasch- und/oder Reinigungsmittelzubereitungen, dadurch gekennzeichnet,
daß die Schutzhülle des Beschichtungsmittels oder - im Falle einer mehrlagig ausgebildeten Schutzhülle - wenigstens die innerste Lage nach dem Verfahren der Ansprüche 1 bis 11 aufgetragen worden ist und das wasserabweisende Beschichtungsmittel ausgewählt worden ist aus der Reihe eines Entschäumergemischs, enthaltend Diamide(Bis-amide) aus einem C₂₋₇-Diamin und C₁₂₋₂₂-Fettsäuren.

13. Verkapseltes Natriumpercarbonat nach Anspruch 12, dadurch gekennzeichnet, daß es als praktisch nicht agglomeriertes rieselfähiges Gut mit Teilchengrößen im Bereich von etwa 0,1 bis 2 mm Durchmesser vorliegt.

14. Verkapseltes Natriumpercarbonat nach Ansprüchen 12 oder 13, dadurch gekennzeichnet, daß es im Natriumpercarbonat-Kern und/oder im Hüllmaterial zusätzlich bekannte Stabilisatoren für Natriumpercarbonat enthält, die insbesondere Komplexbildner zur Metallbindung sein können.

## Claims

1. The use of the process for the application in the molten state of a coating which is solid at room temperature to finely divided solids, wherein the finely-divided solid material is centrifuged in a continuous stream through a likewise continuously produced spray mist zone of the molten coating material, to achieve the moisture-free encasement of solid sodium percarbonate with a water-repellant protective jacket of the coating material which is solid at room temperature, with the coating material being selected from a defoaming mixture which is free from siloxane polymers and emulsifying or dispersing surfactants and is a homogeneous mixture of the following components:
(a) from 25 to 60 percentage by weight of a paraffin wax or mixture of paraffin waxes,
(b) from 10 to 60 percentage by weight of microcrystalline paraffin wax, wherein the proportions of liquid components in the mixture of (a) and (b), determined by differential thermal analysis (DTA), at -15°C are to be 0%, at 0°C from 0% to 5%, at 25°C from 2% to 25%, at 50°C from 20% to 80%, at 75°C from 80% to 100% and above 90°C are to be 100%,
(c) from 5 to 20 percentage by weight of a diamide (bisamide) derived from C₂₋₇ diamines and saturated C₁₂₋₂₂ fatty acids, which is in finely divided form and has a particle size of less than 50 µm, with at least 90% of the particles being smaller than 30 µm or from a mixture of substances comprising a C₂₋₇ diamine and a C₁₂₋₂₂ fatty acid or fatty acid derivative, which mixture is suitable for the in-situ formation of diamide (bisamide).

2. The embodiment according to claim 1, characterised in that the process is carried out with residence times of the sodium percarbonate in the molten spray mist zone of less than one second, preferably of less than 0.5 seconds.

3. The embodiment according to claims 1 and 2, characterised in that the freshly encased sodium percarbonate is cooled immediately and for this purpose is preferably taken up in a flow of cooling gas.

4. The embodiment according to claims 1 to 3, characterised in that a flow of cooling gas based on air/liquid nitrogen is used and is preferably supplied in proportions such that in the cooled material agglutinations of the freshly applied protective jacket are at least to a large extent excluded.

5. The embodiment according to claims 1 to 4, characterised in that the process is carried out using coating materials having a setting point or solidification temperature of above 40°C, preferably about or above 50°C, which suitably does not exceed 150°C and is in particular within the range of from about 45 to 110°C.

6. The embodiment according to claims 1 to 5, characterised in that compounds or mixtures of substances having a setting point range encompassing preferably not more than about 10°C and in particular not more than about 5°C at most are used as coating material.

7. The embodiment according to claims 1 to 6, characterised in that the temperature of the sprayed coating material in the spray mist zone is adjusted to values within the range of about 10 to 50°C above the solidification temperature or solidification range of the coating material.

8. The embodiment according to claims 1 to 7, characterised in that the coating materials used are environmentally compatible and are readily degradable particularly in effluent treatment.

9. The embodiment according to claims 1 to 8, characterised in that coating materials of at least predominantly natural origin are used.

10. The embodiment according to claims 1 to 9, characterised in that the coating material is applied in a single layer or in multiple layers and, in the case of a multilayer application of the coating material, the application of at least the first layer to the sodium percarbonate particles is carried out by the previously described water-free application in the molten state and here the use of paraffinic covering substances may be particularly preferred.

11. The embodiment according to claims 1 to 10, characterised in that the protective coating is applied in quantities of at least about 2 wt.%, preferably in quantities of at least about 5 wt.%, referred to the final product, with the quantity of the optionally multilayer protective coating suitably amounting in total to not more than about 15 to 20 wt.%.

12. A sodium percarbonate powder provided with a protective covering of a water-repellant coating material, in particular for the incorporation of the powder into solid detergent or cleaning agent formulations, characterised in that the protective covering of the coating material or - in the case of a multilayer protective covering - at least the innermost layer has been applied by the process according to claims 1 to 11 and the water-repellant coating material has been selected from the defoaming mixtures containing diamides (bisamides) made from a C₂₋₇ diamine and C₁₂₋₂₂ fatty acids.

13. Encapsulated sodium percarbonate according to claim 12, characterised in that it is in the form of a virtually unagglomerated, pourable material having particle sizes within the range of from about 0.1 to 2 mm in diameter.

14. Encapsulated sodium percarbonate according to claims 12 or 13, characterised in that it contains in the sodium percarbonate core and/or in the covering material additional known stabilisers for sodium percarbonate, which may in particular be complexing agents for the metallic bonding.

## Revendications

1. Utilisation du procédé pour l'application d'une masse fondue d'un revêtement qui est solide à température ambiante sur des substances finement divisées, dans lequel le produit solide finement divisé est entraîné dans un courant continu à travers une zone de nébulisation, également produite en continu, du revêtement en fusion pour que le percarbonate de sodium solide soit enveloppé sans eau par une enveloppe de protection hydrophobe du revêtement solide à température ambiante, le revêtement étant extrait d'un mélange anti-moussant exempt de polymères de siloxane et d'agents tensioactifs émulsionnants ou dispersifs et étant un mélange homogène des composants suivants:
(a) 25 à 60 % en poids d'une cire de paraffine ou d'un mélange de cires de paraffines
(b) 10 à 60 % en poids de cire de paraffine microcristalline, les proportions des composants liquides dans le mélange de (a) et de (b), déterminées par analyse thermique différentielle (ATD), étant de 0 % à -15 °C, de 0 à 5 % à 0 °C, de 2 à 25 % à 25 °C, de 20 à 80 % à 50 °C, de 80 à 100 % à 75 °C et de 100 % au-dessus de 90 °C,
(c) 5 à 20 % en poids d'un diamide (bis-amide), dérivé de diamines comportant 2 à 7 atomes de carbone et d'acides gras saturés comportant 12 à 22 atomes de carbone, qui se trouve sous une forme finement divisée et qui présente une granulométrie inférieure à 50 µm, au moins 90 % des particules étant inférieures à 30 µm, ou d'un mélange de substances convenant pour une formation in situ d'un diamide (bis-amide) à partir d'une diamine comportant 2 à 7 atomes de carbone et d'un acide gras comportant 12 à 22 atomes de carbone ou d'une dérivé d'acide gras.

2. Forme d'exécution selon la revendication 1, caractérisée en ce que le temps de séjour du percarbonate de sodium dans la zone de nébulisation du produit en fusion est inférieur à une seconde, de préférence inférieur à 0,5 seconde.

3. Forme d'exécution selon les revendications 1 et 2, caractérisée en ce que le percarbonate de sodium fraîchement enveloppé est refroidi immédiatement et est, à cette fin, de préférence repris par un courant de gaz de refroidissement.

4. Forme d'exécution selon les revendications 1 à 3, caractérisée en ce qu'on utilise un courant de gaz de refroidissement à base d'air/azote liquide et de préférence en un rapport de quantités tel que des agglomérations se produisant au niveau de l'enveloppe de protection fraîchement appliquée sont, au moins dans une large mesure, exclues dans le produit refroidi.

5. Forme d'exécution selon les revendications 1 à 4, caractérisée en ce qu'on utilise des revêtements présentant un point de fusion ou de solidification supérieur à 40 °C, de préférence d'environ ou supérieur à 50 °C, sans dépasser opportunément 150 °C et étant en particulier compris entre environ 45 et 110 °C.

6. Forme d'exécution selon les revendications 1 à 5, caractérisée en ce qu'on utilise comme revêtement des composés ou des mélanges de substances présentant un point de solidification qui n'est de préférence pas supérieur à environ 10 °C et en particulier pas supérieur à au plus environ 5 °C

7. Forme d'exécution selon les revendications 1 à 6, caractérisée en ce que la température de la masse de revêtement pulvérisé dans la zone de nébulisation est réglée à des valeurs comprises entre environ 10 et 50 °C au-dessus de la température de fusion ou de la plage de fusion de la masse de revêtement.

8. Forme d'exécution selon les revendications 1 à 7, caractérisée en ce qu'on utilise des revêtements écologiquement compatibles et en particulier des revêtements facilement décomposés au cours du traitement des eaux usées.

9. Forme d'exécution selon les revendications 1 à 8, caractérisée en ce qu'on utilise des revêtements étant, au moins principalement, d'origine naturelle.

10. Forme d'exécution selon les revendications 1 à 9, caractérisée en ce que la masse de revêtement est déposée en une couche ou en plusieurs couches, l'application, dans le cas de l'application en plusieurs couches de la masse de revêtement, d'au moins la première couche sur les particules de percarbonate de sodium étant l'application de la masse fondue anhydre décrite ci-dessus et l'utilisation de substances enveloppantes paraffiniques pouvant être particulièrement avantageuse dans ce cas.

11. Forme d'exécution selon les revendications 1 à 10, caractérisée en ce que la couche de protection est appliquée en des quantités d'au moins environ 2 % en poids, de préférence en des quantités d'au moins environ 5 % en poids, par rapport au produit fini, la quantité de la couche de protection, le cas échéant à plusieurs couches, ne représentant au total opportunément pas plus de 15 à 20 % en poids.

12. Poudre de percarbonate de sodium pourvu d'une enveloppe de protection d'un revêtement hydrophobe, en particulier pour son mélange dans des préparations d'agents de lavage et/ou de nettoyage solides, caractérisée en ce que l'enveloppe de protection du revêtement ou - dans le cas d'une enveloppe de protection à plusieurs couches - au moins la couche interne est appliquée selon le procédé des revendications 1 à 11 et en ce qu'on extrait le revêtement hydrophobe de la série d'un mélange anti-moussant, contenant un diamide (bis-amide) formé à partir d'une diamine comportant 2 à 7 atomes de carbone et des acides gras comportant 12 à 22 atomes de carbone.

13. Percarbonate de sodium enrobé selon la revendication 12, caractérisé en ce que la granulométrie du produit qui n'est pratiquement pas aggloméré et pouvant s'écouler est comprise dans la zone d'environ 0,1 à 2 mm de diamètre.

14. Percarbonate de sodium enrobé selon les revendications 12 ou 13, caractérisé en ce que le noyau de percarbonate de sodium et/ou le matériau enveloppant contient des stabilisateurs connus pour le percarbonate de sodium, qui peuvent en particulier être des complexants de fixation des métaux.
